(19) Europäisches Patentamt
European Patent Office
Office européen des brevets

(11) **EP 3 682 670 B1**

(12) **EUROPEAN PATENT SPECIFICATION**

(45) Date of publication and mention
of the grant of the patent:
**02.08.2023 Bulletin 2023/31**

(51) International Patent Classification (IPC):
*H04W 28/10* (2009.01)     *H04W 40/22* (2009.01)
*H04L 47/12* (2022.01)     *H04L 47/30* (2022.01)

(21) Application number: **19822554.2**

(22) Date of filing: **18.06.2019**

(52) Cooperative Patent Classification (CPC):
**H04W 40/22; H04L 47/10; H04L 47/12;**
**H04L 47/30; H04W 28/10;** H04L 47/24

(86) International application number:
**PCT/CN2019/091737**

(87) International publication number:
**WO 2019/242612 (26.12.2019 Gazette 2019/52)**

(54) **TRANSMISSION TECHNIQUES IN A CELLULAR NETWORK**

ÜBERTRAGUNGSTECHNIKEN IN EINEM MOBILFUNKNETZ

TECHNIQUES DE TRANSMISSION DANS UN RÉSEAU CELLULAIRE

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priority: **21.06.2018 GB 201810235**

(43) Date of publication of application:
**22.07.2020 Bulletin 2020/30**

(73) Proprietor: **JRD Communication (Shenzhen) Ltd**
**Shenzhen, Guangdong 518052 (CN)**

(72) Inventor: **MARCO, Olivier**
**Shenzhen, Guangdong 518052 (CN)**

(74) Representative: **Simmons & Simmons**
**City Point**
**One Ropemaker Street**
**London EC2Y 9SS (GB)**

(56) References cited:
**EP-A1- 2 340 663     EP-A1- 3 761 698**
**CN-A- 102 315 923     CN-A- 107 950 071**
**CN-A- 108 574 967     US-A1- 2018 070 227**

- **LG ELECTRONICS INC: "F1-U and F1-C**
  **backhauling between IAB donor and IAB node",**
  **3GPP DRAFT; R3-182846 F1-U AND F1-C**
  **BACKHAULING BETWEEN IAB DONOR AND IAB**
  **NODE, 3RD GENERATION PARTNERSHIP**
  **PROJECT (3GPP), MOBILE COMPETENCE**
  **CENTRE ; 650, ROUTE DES LUCIOLES ; F-06921**
  **SOPHIA-ANTIPOLIS , vol. RAN WG3, no. Busan,**
  **South Korea; 20180521 - 20180525 20 May 2018**
  **(2018-05-20), XP051445346, Retrieved from the**
  **Internet:**
  **URL:http://www.3gpp.org/ftp/Meetings%5F3GP**
  **P%5FSYNC/RAN3/Docs/ [retrieved on**
  **2018-05-20]**
- **SEQUANS COMMUNICATIONS: "Flow control for**
  **DL data congestion", 3GPP DRAFT;**
  **R2-1812851_FLOW CONTROL FOR DL DATA**
  **CONGESTION, 3RD GENERATION**
  **PARTNERSHIP PROJECT (3GPP), MOBILE**
  **COMPETENCE CENTRE ; 650, ROUTE DES**
  **LUCIOLES ; F-06921 SOPHIA-ANTIPOLIS**
  **CEDEX ; FRANCE , vol. RAN WG2, no.**
  **Gothenburg, Sweden; 20180820 - 20180824 10**
  **August 2018 (2018-08-10), XP051522439,**
  **Retrieved from the Internet:**
  **URL:http://www.3gpp.org/ftp/tsg%5Fran/WG2%**
  **5FRL2/TSGR2%5F103/Docs/R2%2D1812851%2E**
  **zip [retrieved on 2018-08-10]**

## Description

## Technical Field

The following disclosure relates to transmission techniques in a cellular network. In particular, the following disclosure relates to flow control within an integrated access and backhaul (IAB) network.

## Background

Wireless communication systems, such as the third-generation (3G) of mobile telephone standards and technology are well known. Such 3G standards and technology have been developed by the Third Generation Partnership Project (3GPP). The 3rd generation of wireless communications has generally been developed to support macro-cell mobile phone communications. Communication systems and networks have developed towards a broadband and mobile system.

In cellular wireless communication systems User Equipment (UE) is connected by a wireless link to a Radio Access Network (RAN). The RAN comprises a set of base stations which provide wireless links to the UEs located in cells covered by the base station, and an interface to a Core Network (CN) which provides overall network control. As will be appreciated the RAN and CN each conduct respective functions in relation to the overall network. For convenience the term cellular network will be used to refer to the combined RAN & CN, and it will be understood that the term is used to refer to the respective system for performing the disclosed function.

The 3rd Generation Partnership Project has developed the so-called Long Term Evolution (LTE) system, namely, an Evolved Universal Mobile Telecommunication System Territorial Radio Access Network, (E-UTRAN), for a mobile access network where one or more macro-cells are supported by a base station known as an eNodeB or eNB (evolved NodeB). More recently, LTE is evolving further towards the so-called 5G or NR (new radio) systems where one or more cells are supported by a base station known as a gNB. NR is proposed to utilise an Orthogonal Frequency Division Multiplexed (OFDM) physical transmission format.

With reference to an IAB network, generally, over the Uu radio interface, the NR UP protocol stack does not explicitly provide a flow control mechanism. For AM, both in uplink (UL) and downlink (DL), the transmitting Packet Data Convergence Protocol (PDCP) entity is aware of the highest in-sequence PDCP Protocol Data Unit (PDU) that has been delivered to the receiving PDCP entity. In this case, the transmitting PDCP entity derives this information indirectly from RLC AM ARQ feedback. For UM, both in UL and DL, the transmitting PDCP entity is aware of highest in -sequence successfully transmitted PDCP PDU (maximum PDCP COUNT successfully transmitted) to the receiving PDCP entity. In this case, the transmitting PDCP entity derives this information indirectly from HARQ feedback, or from PHY feedback as a confirmation that the PDCP PDU was transmitted over Uu. In the DL direction, in the gNB higher layer split architecture (CU/DU), a flow control mechanism is possible on F1-U, which facilitates conveying information from the lower layers (e.g. ARQ or HARQ feedback) or equivalent information (on specific delivered/transmitted PDUs) towards the CU PDCP entity. The information is conveyed on a per UE/bearer basis and uses the NR user plane protocol defined in 3GPP TS 38.425. Therefore, there is provided merely an implicit flow control mechanism on Uu radio interface, whereas an explicit flow control mechanism is defined on F1-U interface.

Flow control is important as it can be employed in order to address the HFN desynchronization issue. The HFN desynchronization issue can be avoided by the PDCP transmitter refraining from transmitting more than half of the PDCP SN space without a confirmation of delivery to the receiving PDCP entity. This means that, at any given point in time, a maximum range of half of the PDCP SN space can be pending (i.e. it has been sent by the PDCP transmitter, but it has not yet been considered received by the PDCP receiver).

Flow control is also important to enable lossless handover (for AM bearers). To realize lossless handover, the transmitting PDCP entity starts retransmitting over the new link PDCP SDUs starting from the first one whose delivery was not considered successful on the old link. That is to say, the transmitting PDCP entity needs to be aware of the PDCP PDU delivery status, in order to be able to discard such PDUs if needed (as those PDUs would no longer be considered for retransmission).

Within an !AB tree, the transmission between PDCP entities involves several hops, i.e. several links of over Uu radio interface. At each intermediate node, packets may be dropped in case of downstream congestion (e.g. temporary blockage on one of the links towards the receiver). This issue is increased by the fact that the network scheduler at a parent !AB node only has direct link information on UEs or !AB nodes connected to it. That is to say, if a parent IAB node serves an IAB bearer aggregating several UEs, and a downstream link (served by another node downstream) for one of this UE becomes congested (e.g. temporary blockage), the parent IAB node will not have visibility on this blockage and will continue scheduling packets for that UE. Such packets would likely have to be discarded by the node serving the congested link.

Therefore, there exists a requirement for a communication protocol with efficient operation of integrated access and wireless backhaul for NR.

The invention proposes to introduce end-to-end (E2E) flow control and/or hop-to-hop flow control within the !AB tree. The end-to-end flow control is required to enable legacy PDCP data transfer operation (including prevention of HFN desynchronization, and lossless handover support). The hop-to-hop flow control is required to avoid congestion in IAB nodes and associated SDU discards, and to provide scheduling fairness among UEs. Document R3-182846 from 3GPP TSG-RAN WG3 #100 (XP51445346) discloses F1-U and F1-C backhauling between an !AB donor and an IAB node.

## Summary

The invention is defined by the appended claim in which there is provided a method of providing flow control information in an opposite direction to a data flow in an Integrated Access Backhaul network by an Adaptation layer, the Integrated Access Backhaul network comprising a plurality of IAB nodes, the method comprising upon polling from a second !AB node or a trigger a first !AB node of the plurality of IAB nodes transmitting hop-by-hop flow control information for an !AB bearer to the second !AB node of the plurality of !AB nodes, wherein the hop-by-hop flow control information is provided for an IAB bearer configured at the first and second IAB nodes and the flow control information indicates an available memory at the first IAB node for the corresponding bearer wherein only in case of memory being available at the first IAB node the second IAB node is allowed to transmit data of the flow.

## Brief description of the drawings

Further details, aspects and embodiments of the invention will be described, by way of example only, with reference to the drawings. Elements in the figures are illustrated for simplicity and clarity and have not necessarily been drawn to scale. Like reference numerals have been included in the respective drawings to ease understanding.

Figure 1 shows a reference diagram for !AB architectures;

Figure 2 shows a proposed architecture group 1 including architectures 1a and 1b;

Figure 3 shows proposed protocol stacks for L2-relaying with adaptation layer for the architecture 1a shown in figure 2;

Figure 4 shows an exemplary data flow between CU, DU and UEs;

Figure 5 shows an exemplary data flow in which 2 bearers serving UE A and B are backhauled on the same !AB RLC bearer;

Figure 6 shows an example baseline architecture;

Figure 7 shows another example baseline architecture;

Figure 8 shows an example of PDCP receive window state variables at a given time within an IAB node and within a UE;

Figures 9 and 10 illustrate examples for hop-by-hop flow control;

Figure 11 shows the provision of absolute scheduling costs.

## Detailed description of the preferred embodiments

Those skilled in the art will recognise and appreciate that the specifics of the examples described are merely illustrative of some embodiments and that the teachings set forth herein are applicable in a variety of alternative settings.

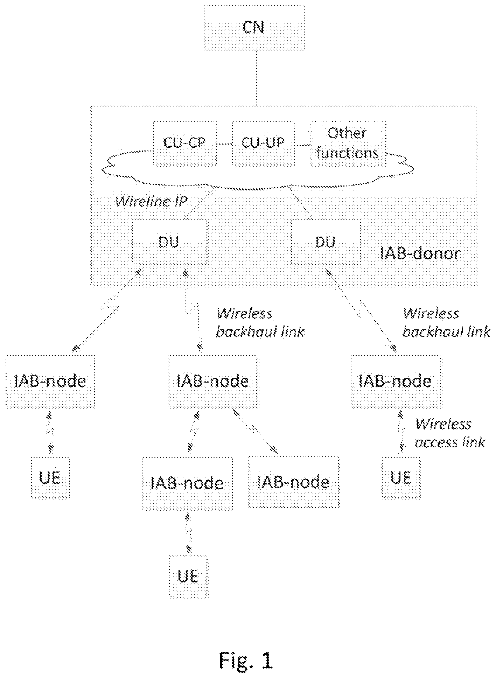

Figure 1 shows a reference diagram for !AB architectures. Generally, IAB strives to reuse existing functions and interfaces defined for access. In particular, Mobile-Termination (MT), gNB-DU, gNB-CU, UPF, AMF and SMF as well as the corresponding interfaces NR Uu (between MT and gNB), F1, NG, X2 and N4 are used as baseline for the !AB architectures. The Mobile- Termination (MT) function has been defined as a component of the Mobile Equipment. Here, MT is referred to as a function residing on an IAB-node that terminates the radio interface layers of the backhaul Uu interface toward the IAB-donor or other IAB-nodes.

Figure 1 shows a reference diagram for IAB in standalone mode, which contains one IAB-donor and multiple IAB-nodes. The IAB-donor is treated as a single logical node that comprises a set of functions such as gNB-DU, gNB-CU-CP, gNB-CU-UP and potentially other functions. In a deployment, the IAB-donor can be split according to these functions, which can all be either collocated or non-collocated as allowed by 3GPP NG-RAN architecture. IAB-related aspects may arise when such split is exercised, which will be explored at a later stage of the study. Also, some of the functions presently associated with the IAB-donor may eventually be moved outside of the donor in case it becomes evident that they do not perform IAB-specific tasks.

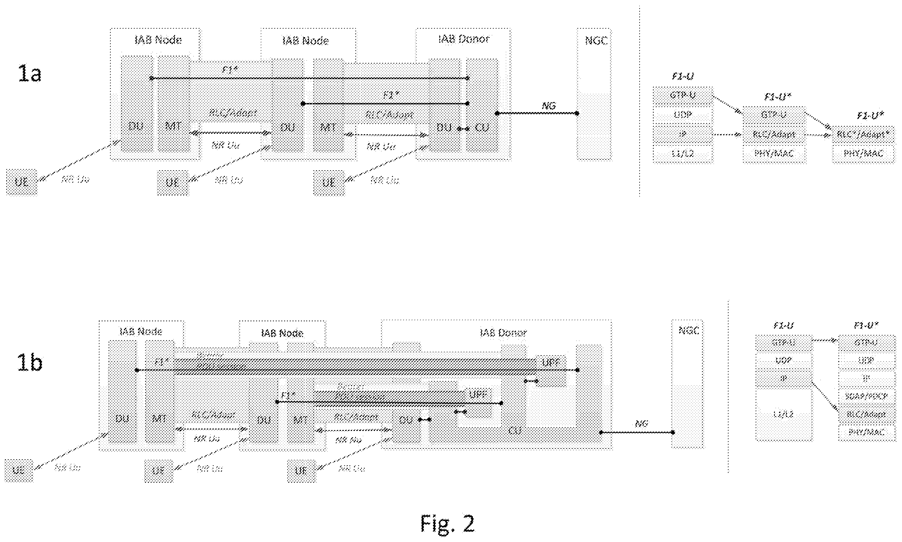

Figure 2 shows a proposed architecture group 1 including architectures 1a and 1b. Proposed IAB multi-hop designs can be represented based on five architecture reference diagrams, two of which are shown in figure 2. These architectures, which differ with respect to the modification needed on interfaces or additional functionality needed (e.g. in order to accomplish multi-hop forwarding) are divided into two architecture groups.

The main features of architecture group 1 are shown in figure 2. Architecture group 1 includes architectures 1a and 1b. Both architectures leverage a CU/DU split architecture. In architecture 1a, backhauling of F1-U uses an adaptation layer or GTP-U combined with an adaptation layer and hop-by-hop forwarding across intermediate nodes uses the adaptation layer. In architecture 1b, backhauling of F1-U on access node uses GTP-U/UDP/IP and hob-by-hop forwarding across intermediate node uses the adaptation layer.

Architecture 1a leverages a CU/DU-split architecture. Figure 2 (1a) shows the reference diagram for a two-hop chain of IAB-nodes underneath an IAB-donor. In this architecture, each IAB node holds a DU and an MT. Via the MT, the IAB-node connects to an upstream IAB-node or the IAB-donor. Via the DU, the IAB-node establishes RLC-channels to UEs and to MTs of downstream IAB-nodes. For MTs, this RLC-channel may refer to a modified RLC*. Whether an IAB node can connect to more than one upstream IAB-node or IAB-donor is FFS.

The donor also holds a DU to support UEs and MTs of downstream IAB-nodes. The IAB-donor holds a CU for the DUs of all IAB-nodes and for its own DU. It is FFS if different CUs can serve the DUs of the IAB-nodes. Each DU on an IAB-node connects to the CU in the IAB-donor using a modified form of F1, which is referred to as F1*. F1*-U runs over RLC channels on the wireless backhaul between the MT on the serving IAB-node and the DU on the donor. F1*-U transport between MT and DU on the serving IAB-node as well as between DU and CU on the donor is FFS. An adaptation layer is added, which holds routing information, enabling hop-by-hop forwarding. It replaces the IP functionality of the standard F1-stack. F1*-U may carry a GTP-U header for the end-to-end association between CU and DU. In a further enhancement, information carried inside the GTP-U header may be included into the adaption layer. Further, optimizations to RLC may be considered such as applying ARQ only on the end-to-end connection opposed to hop-by-hop. The right side of Figure 2 (1a) shows two examples of such F1*-U protocol stacks. In this figure, enhancements of RLC are referred to as RLC*. The MT of each IAB-node further sustains NAS connectivity to the NGC, e.g., for authentication of the IAB-node. It further sustains a PDU-session via the NGC, e.g., to provide the IAB-node with connectivity to the OAM.

Architecture 1b also leverages CU/DU-split architecture. Figure 2 (1b) shows the reference diagram for a two-hop chain of IAB-nodes underneath an IAB-donor. Note that the IAB-donor only holds one logical CU. Whether an IAB node can connect to more than one upstream IAB-node or IAB-donor is FFS. In this architecture, each IAB-node and the IAB-donor hold the same functions as in architecture 1a (see figure 2 (1a)). Also, as in architecture 1a, every backhaul link establishes an RLC-channel, and an adaptation layer is inserted to enable hop-by-hop forwarding of F1*. Opposed to architecture 1a, the MT on each IAB-node establishes a PDU-session with a UPF residing on the donor. The MT's PDU-session carries F1* for the collocated DU. In this manner, the PDU-session provides a point-to-point link between CU and DU. On intermediate hops, the PDCP-PDUs of F1\* are forwarded via adaptation layer in the same manner as described for architecture 1a. The right side of Figure 2 (1b) shows an example of the F1*-U protocol stack.

Architecture group 2 (not shown) includes architectures 2a, 2b and 2c. In architecture 2a, backhauling of F1-U or NG-U on access node uses GTP-U/UDP/IP and hop-by-hop forwarding across intermediate node uses PDU-session-layer routing. In architecture 2b, backhauling of F1-U or NG-U on access node uses GTP-U/UDP/IP and hop-by-hop forwarding across intermediate node uses GTP-U/UDP/IP nested tunnelling. In architecture 2c, backhauling of F1-U or NG-U on access node uses GTP-U/UDP/IP and hop-by-hop forwarding across intermediate node uses GTP-U/UDP/IP/PDCP nested tunnelling.

In the following, architecture group 1, in particular architecture 1a, is focused on. It is understood that architecture 1a enables to minimize overhead on Uu interface.

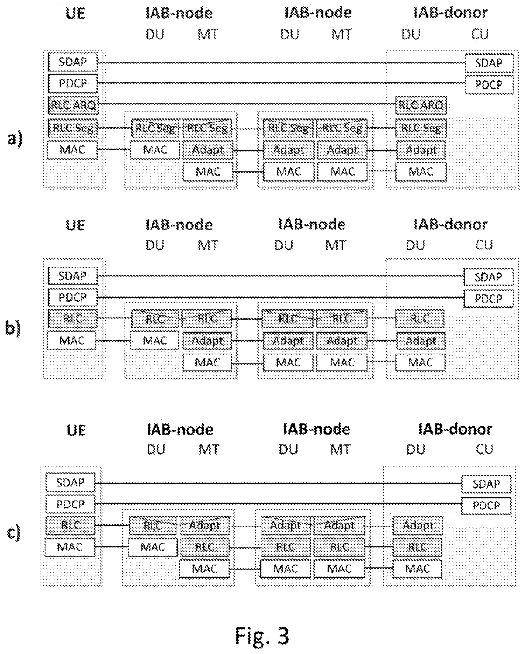

Figure 3 shows proposed protocol stacks for L2-relaying with adaptation layer for architecture 1a. The UE establishes RLC channels to the DU on the UE's access IAB node in compliance with TS 38.300. Each of these RLC-channels is extended via a potentially modified form of F1-U, referred to as F1*-U, between the UE's access DU and the IAB donor. The information embedded in F1*-U is carried over RLC-channels across the backhaul links. Transport of F1*-U over the wireless backhaul is enabled by an adaptation layer, which may be located above or below RLC layer.

The functions supported by the adaptation layer are as follows. In architecture 1a, information carried on the adaptation layer supports: identification of the UE-bearer for the PDU, routing across the wireless backhaul topology, QoS-enforcement by the scheduler on DL and UL on the wireless backhaul link, mapping of UE user-plane PDUs to backhaul RLC channels, and others. In architecture 1b, information carried on the adaptation layer supports: routing across the wireless backhaul topology, QoS-enforcement by the scheduler on DL and UL on the wireless backhaul link, mapping of UE user-plane PDUs to backhaul RLC channels, and others.

The content carried on the adaptation layer header may include: UE-bearer-specific Id, UE-specific Id, route Id, IAB-node or IAB-donor address, QoS information, and potentially other information. Details of the information carried in the adaptation layer are FFS.

The processing of adaptation layer information supports the above-mentioned functions on each on-path IAB-node (hop-by-hop), and/or on the UE's access-IAB-node and the IAB-donor (end-to-end).

The integration of adaptation layer into the L2 Stack includes a placement integrated with MAC layer or above MAC layer (examples shown in figure 3 a) and b)), and above RLC layer (examples shown in figure 3 c)).

It is understood that the figures merely show example protocol stacks and do not preclude other possibilities.

The adaptation layer may consist of sublayers. It is perceivable, for example, that the GTP-U header becomes a part of the adaptation layer. Alternatively, a GTP-U/UDP/IP header stack may be part of the adaptation layer. The design of the adaption header may be architecture-dependent and is FFS.

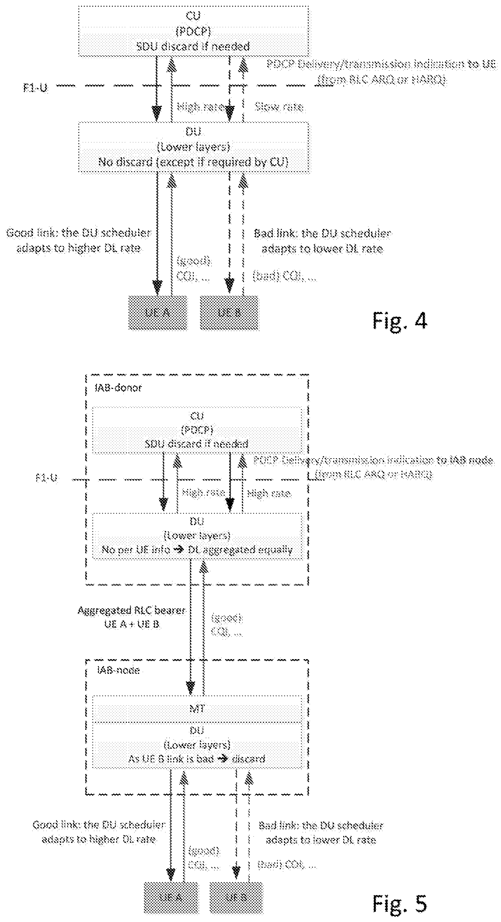

Figure 4 shows an exemplary data flow between CU, DU and UEs. Generally, over the Uu radio interface, the NR UP protocol stack does not explicitly provide a flow control mechanism. However, there is provided an implicit flow control mechanism through feedback from lower layers.

For AM, both in uplink (UL) and downlink (DL), the transmitting Packet Data Convergence Protocol (PDCP) entity is aware of the highest in-sequence PDCP Protocol Data Unit (PDU) that has been delivered to the receiving PDCP entity. In this case, the transmitting PDCP entity derives this information indirectly from RLC AM ARQ feedback.

For UM, both in UL and DL, the transmitting PDCP entity is aware of highest in -sequence successfully transmitted PDCP PDU (maximum PDCP COUNT successfully transmitted) to the receiving PDCP entity. In this case, the transmitting PDCP entity derives this information indirectly from HARQ feedback, or from PHY feedback as a confirmation that the PDCP PDU was transmitted over Uu.

In the DL direction, in the gNB higher layer split architecture (CU/DU), a flow control mechanism is possible on F1-U, which facilitates conveying information from the lower layers (e.g. ARQ or HARQ feedback) or equivalent information (on specific delivered/transmitted PDUs) towards the CU PDCP entity. The information is conveyed on a per UE/bearer basis and uses the NR user plane protocol defined in 3GPP TS 38.425. It allows both flow control and efficient lossless handover implementation.

Flow control is important as it can be employed in order to address the HFN desynchronization issue. The HFN desynchronization issue can be avoided by the PDCP transmitter refraining from transmitting more than half of the PDCP SN space without a confirmation of delivery to the receiving PDCP entity. This means that, at any given point in time, a maximum range of half of the PDCP SN space can be pending (i.e. it has been sent by the PDCP transmitter, but it has not yet been considered received by the PDCP receiver).

Flow control is also important to enable lossless handover (for AM bearers). To realize lossless handover, the transmitting PDCP entity starts retransmitting over the new link PDCP SDUs starting from the first one whose delivery was not considered successful on the old link. That is to say, the transmitting PDCP entity needs to be aware of the PDCP PDU delivery status, in order to be able to discard such PDUs if needed (as those PDUs would no longer be considered for retransmission).

In DL, in order to realize lossless HO, the source gNB starts forwarding packets to the target gNB from the first packet not received in sequence by the UE. Similarly, in UL, the UE starts retransmitting PDCP SDUs starting by the first SDU, the delivery of which has not been acknowledged in sequence. To discard older (acknowledged) packets is a valid UE implementation because such older packets are not needed according to the specification (even though this is not explicitly specified).

The following functions are provided by the NR user plane protocol:

- Provision of NR user plane specific sequence number information for user data transferred from the node hosting NR PDCP to the corresponding node for a specific data radio bearer.

- Information of successful in sequence delivery of NR PDCP PDUs to the UE from the corresponding node for user data associated with a specific data radio bearer.

- Information of NR PDCP PDUs that were not delivered to the UE or the lower layers.

- Information of NR PDCP PDUs transmitted to the lower layers for user data associated with a specific data radio bearer.

- Information of downlink NR PDCP PDUs to be discarded for user data associated with a specific data radio bearer;

- Information of the currently desired buffer size at the corresponding node for transmitting to the UE user data associated with a specific data radio bearer.

- Information of the currently minimum desired buffer size at the corresponding node for transmitting to the UE user data associated with all data radio bearers configured for the UE at the corresponding node;

- Information of successful in sequence delivery of NR PDCP PDUs to the UE from the corresponding node for retransmission user data associate with a specific data radio bearer;

- Information of NR PDCP PDUs transmitted to the lower layers for retransmission user data associated with a specific data radio bearer; and

- Information of the specific events at the corresponding node.

The information of successful in sequence delivery of NR PDCP PDUs can be provided thanks to new NR user plane specific sequence number information for user data transferred from the node hosting NR PDCP to the corresponding node. This SN enables the corresponding node to identify out-of-order/lost PDCP packets.

Further, only DL direction is supported. It is not straightforward to support the UL direction since that would mean considering flow control of user data packets transferred from a "corresponding node" (not hosting NR PDCP) to a node hosting NR PDCP, i.e. the opposite as what the protocol is providing. Then, a first issue would be that as the "corresponding node" (not hosting NR PDCP) do not generate the PDCP PDUs, the PDCP PDUs may already be out-of-order or may already miss some SNs. Adding new NR user plane specific sequence number information does not enable to identify out-of-order/lost PDCP packets.

Within the proposed IAB architectures, currently, NR User Plane Protocol (NUPP) is part of GTP-U which is part of F1-U. Options with backhauling of F1-U enables to extend NUPP towards the access IAB node. However, this adds significant overhead over the air interface (whole F1-U stack: IP/UDP/GTP-U with NUPP). Options related to Architecture 1a are attractive as they enable to reduce this overhead. Within architecture 1a, an adaptation layer is added, which holds routing information, enabling hop-by-hop forwarding. It replaces the IP functionality of the standard F1-stack. The IAB-donor holds a CU for the DUs of all IAB-nodes and for its own DU. Each DU on an IAB-node connects to the CU in the IAB-donor using a modified form of F1, which is referred to as F1*. F1*-U denotes the user plane part of this interface.

F1*-U is realized: between DU and MT on the serving IAB-node: FFS; between MT on the serving IAB-node and the DU on the donor: over RLC channels; and between DU and CU on the donor: it is assumed F1-U might be reused as a baseline, with relaying at the donor DU.

With respect to the congestion/discard issue within IAB network, in the IAB network, the lack of flow control mechanism between nodes can be an issue. The following description is focused on the architecture 1a (see figure 2 (1a)), UP option c). It is noted, however, that this merely serves to simplify the description, the proposal is not limited to this architecture.

For simplicity a case is considered where there is no particular QoS distinction to be made, i.e. all UEs have one bearer with similar QoS characteristics. In this simplest alternative, this option can be seen as adding a UE_ID (through Adapt layer) to the PDCP PDUs. The UE_ID enables routing across the IAB tree.

Figure 5 shows an example in which 2 bearers serving UE A and B are backhauled on the same IAB RLC bearer. A preferred embodiment, to facilitate scalability of IAB, includes aggregating different UE bearers within the same backhaul bearer (IAB bearer). Figure 5 shows an example in which 2 bearers serving UE A and B are backhauled on the same IAB RLC bearer, and can be discriminated by the UE_ID added by the adaptation layer.

As shown in figure 5, the scheduler at the IAB-donor side will handle UEs equally, even if UE B link is bad/congested. This will result in overloading the IAB node for UE B, possibly resulting in discarding SDUs for UE B. It can also be seen that unfairness appear in scheduling on the IAB backhaul link: the scheduling weight of UE A and UE B (for instance as could be derived from a proportional fair scheduling) should ideally be applied as well at the IAB donor side.

With respect to HFN desynchronization/lossless HO issue within the IAB network, another issue is that in DL, the PDCP successful delivery/transmission indication is only towards the first IAB node, not towards the UE. Similarly, in UL, the PDCP successful delivery/transmission indication is only towards the access IAB node, not towards the gNB. As a result, the transmitting PDCP entity cannot easily ensure that PDCP PDUs corresponding to less than half of the PDCP SN space are pending. HFN desynchronization issue might happen, e.g. as soon as PDCP PDUs corresponding to more than half of the PDCP SN space get discarded in the IAB network.

This is also problematic for supporting lossless HO. In DL, the source gNB may have buffered old PDCP SDU, but it does not know up to which start retransmissions. This can lead to inefficient implementation. In UL, as older (acknowledged) packets are never needed in the specification, it is a perfectly valid UE implementation to discard such packets (even if not explicitly specified), as soon as RLC ACK SN indicates cumulative acknowledgment of such packets. If such packets were not delivered to the IAB-donor, but lost or stuck somewhere in the IAB tree, they will not be retransmitted and will be definitely lost.

The proposed methods and systems according to the present invention are directed at solving the above-described issues.

The end-to-end flow control is required to enable legacy PDCP data transfer operation (including prevention of HFN desynchronization, and lossless handover support). This cannot be achieved in architectures without F1-U backhauling, or F1*-U containing at least NUPP.

The hop-to-hop flow control is required to avoid congestion in IAB nodes and associated SDU discards, and to provide scheduling fairness among UEs.

A generic approach for enabling PDCP data transfer operation (including prevention of HFN desynchronization, and lossless handover support) would be to rely on PDCP status report polling from the PDCP entity (solution implemented for instance for LWA bearers). However, IAB needs to support legacy NR UEs (Rel-15). Therefore, such a generic approach is not applicable.

An alternative approach would include relying on flow control provided over F1-U, i.e. in NUPP within GTP-U (leveraging NUPP within GTP-U between the IAB donor and the IAB access node DU). This is applicable in DL. The access IAB node would be able to send DL DATA DELIVERY STATUS information to the donor node, hosting PDCP. However, one of the main drawbacks is added overhead. New NR-U Sequence Numbers need to be applied to all downlink packets. Moreover, this alternative approach is not straightforward in UL, as NUPP is not supported for UL data transfer and cannot easily be extended (see above).

Regarding the congestion issues within the IAB tree, a generic approach would include using architecture such as each IAB link is supported by a PDU session, with appropriate QoS. However, such an architecture would introduce a high overhead.

The proposed end-to-end flow control according to the present invention relies on the access IAB node to maintain an image of the UE receive PDCP window, even though it does not implement PDCP from data path point of view (PDCP would not need to be included in the protocol stack). The receive PDCP window inside the access IAB node is updated based on PDCP PDUs successfully delivered/transmitted to UE (based on ARQ/HARQ or PHY feedback), and not based on received PDCP PDUs as in a regular PDCP implementation. The access IAB node needs also to be provided with a reordering timer value (ideally matching the one configured to the UE PDCP).

One of the main benefits of the proposed flow control includes that the overhead/complexity of additional sequence numbers can be avoided.

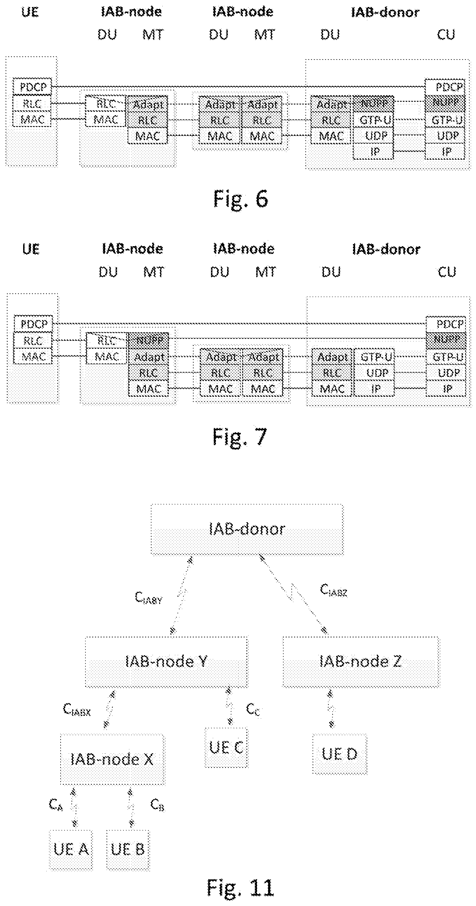

The end-to-end flow control according to the present invention is described below, with respect to figures 6, 7, and 8.

Figure 6 shows an example baseline architecture in accordance with embodiments of the present invention. As shown, in DL, the CU transmitting PDCP entity should be aware of the PDCP successful delivery/transmission towards the UE. If F1-U is terminated in the access IAB-node, the CU can have this information by polling the access IAB-node using NUPP. However, such solution comes at the expense of very high overhead on the wireless backhaul. We focus on architectures where F1-U is not terminated in the access IAB-node. A UE-based solution could rely on UE PDCP sending status report (SR), either based on polling or autonomous triggers. However, this is not available for legacy UEs. Hence, it can be preferable to rely on NW-based solution.

As shown, the internal DU/CU split of the IAB donor has been detailed, and the NUPP layer over GTP-U has been added for description purposes. The NUPP is actually not a separate layer, but embedded in GTP-U extension header within NR RAN Container, however this can be considered as a separate layer/header to ease the understanding. In this architecture, the flow control (knowledge of PDCP PDU successfully delivered) is only available for delivery to the first IAB-node.

In accordance with embodiments of the present invention, an option is to have NUPP termination point at the access IAB-node, as shown in figure 7.

Figure 7 shows an example baseline architecture in accordance with embodiments of the present invention. Similar to what is described above, NUPP does not need to be a separate layer. In figure 7, NUPP would be embedded in the NUPP GTP-U extension header (in NR container of GTP-U) between IAB-donor CU and DU, relayed at IAB-donor DU, and embedded in the Adapt layer header between IAB-donor DU and access IAB-node. Hence in this embodiment, NUPP fields are included in the Adapt layer. This has the benefit to reduce specification impact, as the NUPP protocol can be reused. However, there is still significant overhead on the wireless backhaul as a specific SN is added by NUPP on each packet.

With NUPP, the "corresponding node" is able to provide the highest NR PDCP PDU SN successfully delivered in sequence to the UE among those NR PDCP PDUs received from the node hosting the NR PDCP entity thanks to RLC ACK feedback from UE, as well as detection of any missing NR PDCP PDUs in the receive sequence. This detection is made possible by additional information in NUPP, in particular the additional SN added to all DL packets. A similar functionality can be realized by not including the whole NUPP frames in the Adapt layer, but only additional Adapt layer Sequence number in the data flow direction, and PDCP status in the opposite direction. However, even if this slightly reduces the overhead compared to conveying NUPP frames, the overhead of adding a specific SN to each packet is still there.

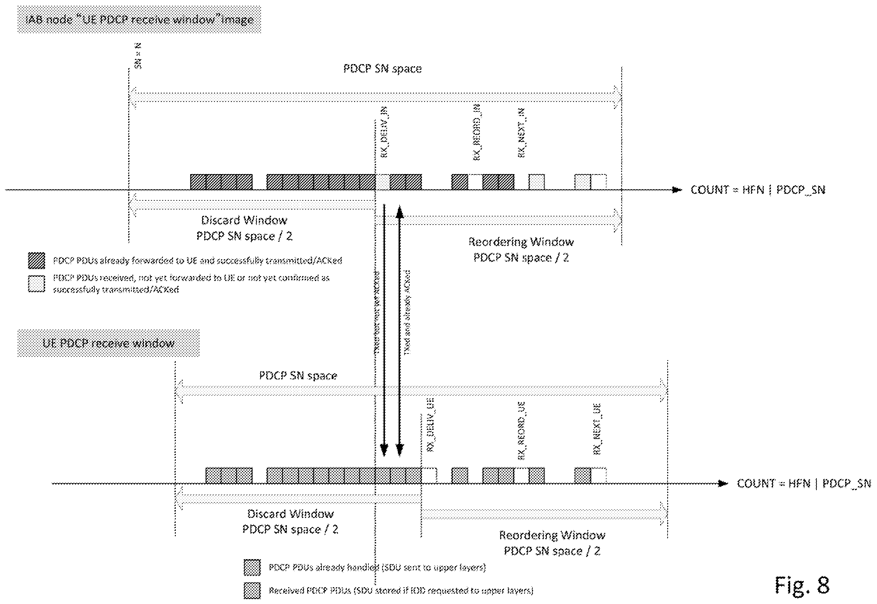

Figure 8 shows an example of PDCP receive window state variables at a given time within an IAB node and within a UE. An alternative to deriving similar information is to have the access IAB-node maintain an image of the UE PDCP receive window. With this embodiment, the access IAB-node keeps track of PDCP PDUs received from the donor node, and transmitted to the UE. The access IAB-node shall maintain an image PDCP receive window based on PDCP PDUs successfully delivered to UE (in case of AM) or successfully transmitted to UE (in case of UM). In other words, the IAB-node updates PDCP receive state variables by considering PDCP PDUs "received" when their delivery/transmission was confirmed. In case a gap occurs in the received PDCP PDUs sequence (from the parent node), the IAB node does not start a reordering timer. The reordering timer is started only when there is a gap in the sequence of the PDCP PDUs for which delivery/transmission was confirmed (from the lower layer feedback of the UE link).

In this manner, the image window is always a bit late compared to the UE internal PDCP window. The IAB node can maintain RX_DELIV_IN variable, which represents the PDCP PDU following the highest PDCP PDU delivered/transmitted successfully in-sequence to the UE (first missing count, or first missing SN). The reordering timer ensures the packet loss detection. Packets from one sequence gap are considered lost upon expiry of the reordering timer associated to a higher COUNT value.

One of the main benefits of the proposed embodiment is that it avoids including a new SN as in NUPP. Instead, what is required is mainly reordering timer information, which can be configured through CP configuration of the access IAB node on a per UE/bearer basis.

It is further proposed to enhance the Adapt layer within the baseline architecture (see figure 6) so that it can convey the following information (on a per UE/bearer basis):

- in DL, a polling bit which enables to request a PDCP status

- in UL, PDCP status information, which consists in the lower edge of the access IAB node "UE PDCP receive window image". It can be equivalently:

  ★ highest in-sequence PDCP SN or PDCP COUNT of PDCP PDUs successfully delivered/transmitted to UE

  ★ first missing PDCP SN or PDCP COUNT (i.e. corresponding RX_DELIV_IN), based on PDCP PDUs successfully delivered/transmitted to UE

In the above, "successfully delivered" means RLC ACK was received from UE (AM case) and "successfully transmitted" means transmission is considered successful from lower layers point of view (UM case, e.g. just transmitted thanks to PHY feedback, or HARQ feedback indicated successful transmission). Further, "in-sequence" means without any gap in the sequence. In case of a gap in PDCP PDU sequence (which can happen in case PDCP SN was skipped or a discard occurs within the IAB tree), the gap is cleared only after reordering timer expiry. No additional SN is needed as part of the Adapt layer.

It is further proposed that NUPP is terminated in the IAB-donor DU, and the IAB-donor DU performs relaying of polling from NUPP to the Adapt layer, as well as relaying of PDCP status information from the Adapt layer to NUPP.

The overall function handling includes:

  * the IAB-donor CU implements NUPP and polls for PDCP status

  * the IAB-donor DU forwards the polling in Adapt layer

  ★ the receiver (access IAB-node) implements a receiving PDCP window, delayed image of the UE PDCP receiving window, based on PDCP PDUs successfully delivered/transmitted to UE, so it can generate the PDCP status whenever needed

  ★ the receiver (access IAB-node) generates and send the PDCP status upstream upon polling

  ★ the IAB-donor DU generates the NUPP PDCP status and send it to CU

  ★ the intermediate IAB-nodes forward the polling/PDCP status between DU and MT side

It is important to note that the receiving PDCP window at the access IAB node does not impact the data flow towards the UE in any way. The receiving PDCP PDUs are relayed towards the UE without any delay. The receiving PDCP window is maintained for the sole purpose of being able to generate a PDCP status whenever required. The PDCP remains terminated on UE and IAB-donor CU, hence no full-fledged PDCP entity is required at the access IAB node.

In order to minimize the delta between the UE PDCP receive window and its image within the access IAB node, the access IAB node may poll the UE (at RLC level) whenever a poll for PDCP status is received, and only send the PDCP status when the UE has answered the RLC poll.

The PDCP status may be triggered by polling as described above, or autonomously triggered. Autonomous triggers may be based on time period or SN delta period, and may be configured.

In order to minimize overhead associated to polling and reporting of PDCP status, the donor IAB node may trigger polling only when required, for instance when noticing overall link degradation (by some other means), or before handover.

As shown, in UL, the UE transmitting PDCP entity should be aware of the PDCP successful delivery/transmission (indication) towards the IAB-donor CU.

A similar concept as the one proposed for DL is applicable. I.e., it is proposed to introduce:

- in UL, a polling bit which enables the access IAB node to request a PDCP status

- in DL, PDCP status information, which consists equivalently in

  ★ highest in-sequence PDCP SN or PDCP COUNT of PDCP PDUs successfully delivered/transmitted to the CU

  ★ first missing PDCP SN or PDCP COUNT (i.e. corresponding RX_DELIV), based on PDCP PDUs successfully delivered/transmitted to CU

The overall function handling is as follows:

  * the access IAB-node limits RLC ACK_SN (within RLC STATUS PDU) progression to the packets effectively confirmed as delivered by the PDCP status (in AM),

  * the access IAB-node limits MAC scheduling so that no more than half of PDCP SN are pending (thanks to the information of packets effectively confirmed as transmitted in PDCP status),

★ the access IAB-node regularly send polls to get the PDCP status (as needed),

★ the receiver (IAB-donor DU) implements a receiving PDCP window (image of the receiving PDCP window in the CU), so it can generates the PDCP status,

* the receiver (IAB-donor DU) generates the PDCP status and send it back on the Adapt layer.

★ the intermediate IAB-nodes forward the polling/ PDCP status between DU and MT side

Optionally, NUPP could be enhanced to support UL PDCP status polling:

* at the IAB-donor DU, the poll is relayed from the Adapt layer to NUPP (new polling field used in UL),
★ at the IAB-donor CU, the poll is forwarded to PDCP, which returns the PDCP status,
★ the PDCP status is included in NUPP (new message/frame, which may reuse the status message used for DL data transfer),
★ the IAB-donor DU relays the PDCP status from NUPP to Adapt layer.

In that case, the DU does not have to implement the receiving PDCP window (image of the receiving PDCP window in the CU).

For AM, the main benefit is that UE will not discard packets unless they are confirmed as successfully received by the IAB-donor. This would prevent the UE from discarding packets which may still be needed (e.g. packets which were just successfully sent to the access IAB-node, but got discarded in the IAB tree before reaching CU), and allow lossless handover.

For UM, it seems not realistic/desirable to delay HARQ feedback. However, the MAC scheduling can be adapted. The main benefit is that the access IAB node has necessary information to prevent the UE (by proper MAC scheduling) to send more than half the PDCP SN space within the IAB tree (i.e. which have not yet reached the donor DU).

The PDCP status may be triggered by polling as described above, or autonomously triggered. Autonomous triggers may be based on time period or SN delta period, and may be configured.

In order to minimize overhead associated to polling and reporting of PDCP status, the access IAB node may trigger polling only when required, for instance when noticing overall link degradation (by some other means), or before handover.

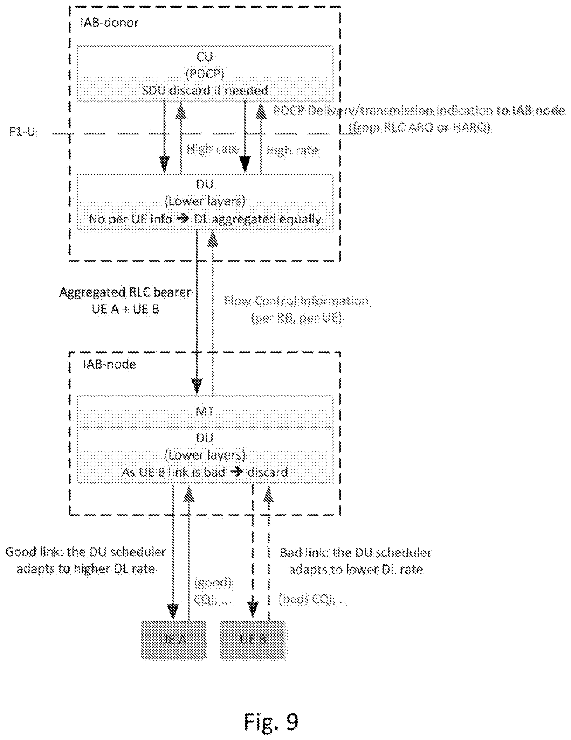

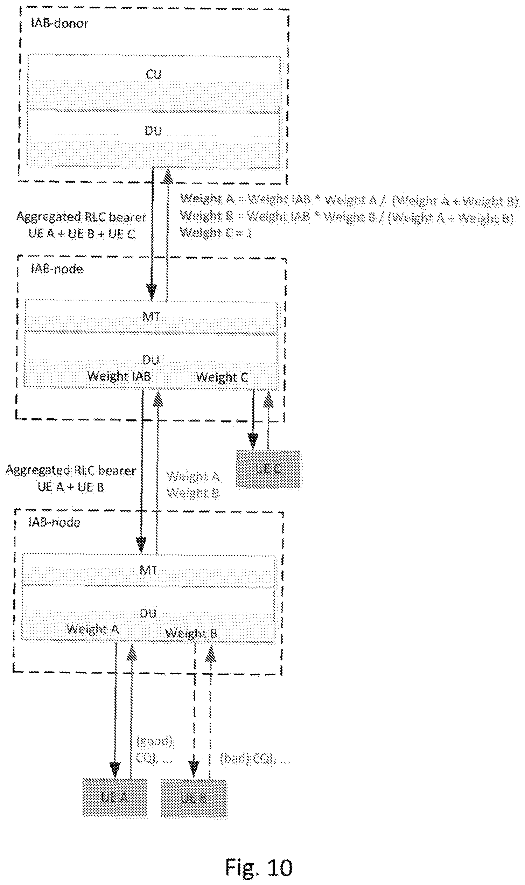

Figures 9 and 10 illustrate hop-by-hop flow control in accordance with embodiments of the present invention. The previous embodiments facilitate restoring basic UP principles for DRB data transfer. The PDCP transmitting entity can gain knowledge (to some extent) of successfully delivered/transmitted PDCP PDUs towards the receiving entity. This facilitates preventing HFN desynchronization (for AM and UM) as well as allows lossless HO.

However, the end-to-end flow control does not solve potential congestion issues within the IAB network, leading to discard of SDUs within the IAB network, as described initially. It also does not solve fairness issues among UEs.

To this end, it is required to provide more detailed information on a hop-by-hop basis. It is proposed to introduce flow control information (FCI). The FCI should be per UE/bearer. Hence, it is added in the Adapt layer, as control information (in the opposite direction from the flow). Contrary to the end-to-end control information discussed in previous embodiments, the FCI for hop-by-hop would be relevant to each link between IAB nodes, i.e. a child IAB node would provide this information to its parent IAB node(s) through the Adapt layer.

There are several alternatives for possible content of FCI: relative scheduling weights and absolute scheduling costs, as well as maximum achievable throughput, receive window/buffer status, number of UE/bearers served on an IAB link.

With respect to relative scheduling weights and in reference to figures 9 and 10, in above example, the access IAB-node scheduling weights of UE A and UE B bearers would be reported to the parent node. The total weight may be conveyed also, or equivalently the weights might be normalized. Practically, these weights would be use to feed the IAB RLC bearer.

Assuming reported weight for UE A = 3, reported weight for UE B = 1, then the IAB RLC bearer would be filled with three times more data for UE A than for UE B. The weights can be reported further up to the top of the IAB tree by appropriate scaling.

For instance, if the parent node was another IAB node, serving in addition UE C, the MAC scheduler would use weight IAB and weight C. This is shown in figure 10.

The MAC scheduler might need to take into account the number of IAB UEs addressed by the IAB bearer. For instance, in equal radio conditions, weight IAB could be twice the weight of UE C (however, other implementations are possible, this is only an example).

Then, the weights reported to the parent node would be (in that case):

• Weight A = Weight IAB * Weight A / (Weight A + Weight B) = 2 * 3/4 = 3/2

• Weight B = Weight IAB * Weight B / (Weight A + Weight B) = 2 * 1/4 = 1/2

• Weight C = 1

These weights correspond to the relative data ratio to be used when feeding the IAB RLC bearer at the IAB-donor.

More generally, the weights could be reported to a parent IAB-node per UE and per bearer, among all the UE/bearers sharing the same aggregated IAB bearer served by the parent IAB-node. These weights correspond to the relative data ratio to be used when feeding the IAB RLC bearer at the parent IAB-node: assuming full buffer traffic for all UE/bearers, the parent node would have to use those relative weights to feed the IAB RLC bearer, in order to match downstream scheduling. How these weights are set by the child IAB-node is implementation dependent. It is an indication from child IAB-node of weights to be applied as an input to the IAB bearer in order to match the scheduling of the child IAB-node. For instance, in case the child IAB-node is an access IAB node serving several UEs, it is expected that the weights would match the weights used by the IAB access node MAC scheduler.

The weights are updated and reported up to the top of the tree based on each node MAC scheduler weights. The weights of bearers within the IAB bearer do not depend of RF conditions of the serving IAB node, only of RF conditions of below node(s). The weight of the IAB bearer relative to other IAB bearers/UEs will depend on RF of the serving IAB node, from MAC scheduler (implementation dependent).

If anywhere in the tree, a UE gets in very bad condition, the weight from its access node will be ~0, reported up to the donor which will stop feeding the first IAB bearer for that UE.

Without such information, the donor would continue feeding this UE without any clue what is happening below which will result in 1) waste of resources on the IAB bearer(s) 2) massive discard at the access IAB-node.

In case a UE has several bearers multiplexed in the IAB bearer, as an alternative, the relative weights might be per UE only, with the implicit understanding that in case, all bearers would have the same priority anyway (i.e. the parent node would apply same weight for each bearer, equal to the UE weight divided by the number of bearers).

Equivalently, the relative weights could be replaced by the corresponding relative cost (in terms of radio resource), or relative maximum throughput. The relative scheduling weights can help to mitigate congestion on the child IAB node. However, it might not be possible to prevent congestion entirely.

It is understood that this information allows a bottom-up scheduling approach, whereby the scheduling decisions (weights) from access IAB nodes (serving the UEs) are conveyed upstream, in order for the intermediate IAB nodes and donor IAB nodes to feed the IAB bearers with the corresponding weights.

Figure 11 shows the provision of absolute scheduling costs in accordance with embodiments of the present invention. When using relative weights (or costs), a parent IAB node has only information about the prioritization it should apply towards scheduling of UE/bearers multiplexed within the same IAB RLC bearer.

In the above example, at the intermediate node, equivalent radio conditions for IAB bearer and UE C bearer are assumed at intermediate node. Then, knowing that the IAB bearer serves 2 UEs, the intermediate node MAC scheduler sets the weight IAB to be twice the weight of UE C.

Another strategy, extending radio aware scheduling concepts, would be to provide the MAC scheduler at the intermediate (or donor) IAB node with absolute scheduling costs (e.g., in terms of radio resource) downstream of the MAC scheduler. The cost could be in normalized unit, such as resource element/bit (time*frequency*spatial layer/bit).

With reference to figure 11, for instance, UE A and UE B cost over access link (from IAB-node X) could be $C_A = 1$ and $C_B = 3$ respectively. The cost of IAB backhaul and the cost of UE C could be $C_{IABX} = 2$ and $C_C = 2$ respectively (from IAB-node Y), if we assume same radio conditions.

The scheduler at IAB-node Y might use this information for instance to allocate resource among UEs in a fair proportional way, considering total cost downstream. In this example:

- $$\text{Cost A} = C_A + C_{IABX} = 3$$

- $$\text{Cost B} = C_B + C_{IABX} = 5$$

- $$\text{Cost C} = C_C = 2$$

The UEs might be scheduled in inverse proportionality to their cost, i.e. in the above example:

- $$\text{Weight A} = 1/3$$

- $$\text{Weight B} = 1/5$$

- $$\text{Weight C} = 1/2$$

The weights can be reported further up to the top of the IAB tree by appropriate aggregation, for instance just cumulating the cost of each link for a given UE. However, other aggregation strategies are possible. For instance, costs over IAB backhaul links might be considered with a different weight than access the access link, in order not to penalize too much UEs located at the end of the tree.

With this embodiment, the top scheduler would make main scheduling decisions.

In case a UE has several bearers multiplexed in the IAB bearer, the absolute weights/costs might be per UE only, not per bearer, as it is expected that the cost would be the same for each bearer of the same UE.

Equivalently, the absolute costs could be replaced by the corresponding absolute weights (achievable throughput per resource element, or equivalently number of bits achievable per a given unit of time*frequency*spatial layer).

The absolute costs can help to mitigate congestion on the child IAB node(s), but they do not prevent it. They are mainly useful to ensure fairness among UEs.

It is understood that this information allows a top-down scheduling approach, whereby the top level scheduler in the IAB tree (at the donor IAB) would be able to perform scheduling decisions based on an estimated total cost for that UE, thanks to the reporting in FCI.

Regarding the maximum achievable throughput, with the above signalling of absolute costs, it can be useful to indicate the maximum achievable throughput per UE (or equivalently, if absolute cost/weight is signalled, the maximum number of time*frequency*spatial layer resources that can be used by the UE per time unit).

This facilitates taking into account additional capabilities as the UE such as bandwidth, CA capabilities in a dynamic way depending for instance on activated cells.

As stated earlier, both relative or absolute weight/costs information can help mitigating congestion on the child IAB node(s), but they do not prevent it. Some additional information is required, such as receive window or buffer status information.

Regarding the receive window (e.g., available memory for the corresponding bearer, or available number of PDUs which can be received) or buffer status (queued data for transmission, along with a max value), the intent of this metric is to provide transmission buffer information on a per UE/RB basis (multiplexed within the IAB RLC bearer). Providing such information prevents overload (congestion) and SDU discard. Moreover, by ensuring that transmission buffer queues are between UEs are equal, fairness can be ensured.

When considering an aggregated IAB bearer, for instance serving UE A and UE B, in the previous example, the IAB node may report per UE/bearer queue size. The relative queue size can be used as relative inverse data ratio to be used when feeding the IAB RLC bearer. That is to say, per UE/bearer receive window or buffer status information avoid signalling relative weights.

In the given example, the UE A is served 3 times more than UE B. From initial UE/bearer queue size, the IAB node will adjust the reported queue size ratio to 3/4 for UE A, and 1/4 for UE B.

Alternatively, the receive window or buffer status can be provided on a per UE basis (multiplexed within the IAB RLC bearer), assuming multiple bearers of the same UE would share the same receive window or transmission buffer within the child IAB node.

Regarding the number of UEs being served and number of bearers per UE on the IAB link, this is required to scale the MAC scheduling accordingly. However, this information might also be configured/derived from control plane instead.

Regarding the receive window, instead of providing the information on a per UE/bearer basis, it can be provided on a per (aggregated) IAB bearer basis (e.g., available memory for the corresponding IAB bearer, or available number of PDUs which can be received). This could be used if combined with the per UE/bearer weight report (relative or absolute).

If weights are reported, they ensure fairness as well as correct initial feeding radio over IAB bearers. The only remaining requirement is to prevent congestion, hence a per aggregated bearer receive window is enough. This has the advantage of reducing the overhead linked to frequent flow control feedback reporting.

Regarding providing receive window information on an IAB bearer basis, as it would no longer be UE/bearer dependant, an option would be to enhance Adapt layer to provide IAB bearer information (i.e., using a generic UE/bearer ID indicating that the information is not specific to a given UE/bearer but related to the IAB bearer). Another option is to include this information in RLC layer, as the aggregated IAB bearer is transported over a RLC channel. This information could be included in RLC control PDU or piggy backed in header of RLC data PDU. Another option is to include this information in MAC layer, as a MAC transport block is dedicated for one MT function. This information could be included in a MAC control element or included in MAC PDU header. In case several IAB bearers are configured for the same MT, they can be discriminated at MAC level as they are associated to different logical channels.

Regarding receive window information, different granularity can be used. The lower overhead/ less granularity is to indicate whether reception is possible (memory is available for the corresponding UE/bearer or aggregated IAB bearer), in which case the transmitter is allowed to transmit, or not (memory is not available for the corresponding UE/bearer or aggregated IAB bearer), in which case the transmission is forbidden.

The FCI is reported based on the usual mechanism, as by polling or trigger based or for example periodically.

Although not shown in detail any of the devices or apparatus that form part of the network may include at least a processor, a storage unit and a communications interface, wherein the processor unit, storage unit, and communications interface are configured to perform the method of any aspect of the present invention. Further options and choices are described below.

The signal processing functionality of the embodiments of the invention especially the gNB and the UE may be achieved using computing systems or architectures known to those who are skilled in the relevant art. Computing systems such as, a desktop, laptop or notebook computer, hand-held computing device (PDA, cell phone, palmtop, etc.), mainframe, server, client, or any other type of special or general purpose computing device as may be desirable or appropriate for a given application or environment can be used. The computing system can include one or more processors which can be implemented using a general or special-purpose processing engine such as, for example, a microprocessor, microcontroller or other control module.

The computing system can also include a main memory, such as random access memory (RAM) or other dynamic memory, for storing information and instructions to be executed by a processor. Such a main memory also may be used for storing temporary variables or other intermediate information during execution of instructions to be executed by the processor. The computing system may likewise include a read only memory (ROM) or other static storage device for storing static information and instructions for a processor.

The computing system may also include an information storage system which may include, for example, a media drive and a removable storage interface. The media drive may include a drive or other mechanism to support fixed or removable storage media, such as a hard disk drive, a floppy disk drive, a magnetic tape drive, an optical disk drive, a compact disc (CD) or digital video drive (DVD) read or write drive (R or RW), or other removable or fixed media drive. Storage media may include, for example, a hard disk, floppy disk, magnetic tape, optical disk, CD or DVD, or other fixed or removable medium that is read by and written to by media drive. The storage media may include a computer-readable storage medium having particular computer software or data stored therein.

In alternative embodiments, an information storage system may include other similar components for allowing computer programs or other instructions or data to be loaded into the computing system. Such components may include, for example, a removable storage unit and an interface, such as a program cartridge and cartridge interface, a removable memory (for example, a flash memory or other removable memory module) and memory slot, and other removable storage units and interfaces that allow software and data to be transferred from the removable storage unit to computing system.

The computing system can also include a communications interface. Such a communications interface can be used to allow software and data to be transferred between a computing system and external devices. Examples of communications interfaces can include a modem, a network interface (such as an Ethernet or other NIC card), a communications port (such as for example, a universal serial bus (USB) port), a PCMCIA slot and card, etc. Software and data transferred via a communications interface are in the form of signals which can be electronic, electromagnetic, and optical or other signals capable of being received by a communications interface medium.

In this document, the terms 'computer program product', 'computer-readable medium' and the like may be used generally to refer to tangible media such as, for example, a memory, storage device, or storage unit. These and other forms of computer-readable media may store one or more instructions for use by the processor comprising the computer system to cause the processor to perform specified operations. Such instructions, generally 45 referred to as 'computer program code' (which may be grouped in the form of computer programs or other groupings), when executed, enable the computing system to perform functions of embodiments of the present invention. Note that the code may directly cause a processor to perform specified operations, be compiled to do so, and/or be combined with other software, hardware, and/or firmware elements (e.g., libraries for performing standard functions) to do so.

The non-transitory computer readable medium may comprise at least one from a group consisting of: a hard disk, a CD-ROM, an optical storage device, a magnetic storage device, a Read Only Memory, a Programmable Read Only Memory, an Erasable Programmable Read Only Memory, EPROM, an Electrically Erasable Programmable Read Only Memory and a Flash memory. In an embodiment where the elements are implemented using software, the software may be stored in a computer-readable medium and loaded into computing system using, for example, removable storage drive. A control module (in this example, software instructions or executable computer program code), when executed by the processor in the computer system, causes a processor to perform the functions of the invention as described herein.

Furthermore, the inventive concept can be applied to any circuit for performing signal processing functionality within a network element. It is further envisaged that, for example, a semiconductor manufacturer may employ the inventive concept in a design of a stand-alone device, such as a microcontroller of a digital signal processor (DSP), or application-specific integrated circuit (ASIC) and/or any other sub-system element.

It will be appreciated that, for clarity purposes, the above description has described embodiments of the invention with reference to a single processing logic. However, the inventive concept may equally be implemented by way of a plurality of different functional units and processors to provide the signal processing functionality. Thus, references to specific functional units are only to be seen as references to suitable means for providing the described functionality, rather than indicative of a strict logical or physical structure or organisation.

Aspects of the invention may be implemented in any suitable form including hardware, software, firmware or any combination of these. The invention may optionally be implemented, at least partly, as computer software running on one or more data processors and/or digital signal processors or configurable module components such as FPGA devices.

Thus, the elements and components of an embodiment of the invention may be physically, functionally and logically implemented in any suitable way. Indeed, the functionality may be implemented in a single unit, in a plurality of units or as part of other functional units. Although the present disclosure has been described in connection with some embodiments, it is not intended to be limited to the specific form set forth herein. Rather, the scope of the present invention is limited only by the accompanying claim. Additionally, although a feature may appear to be described in connection with particular embodiments, one skilled in the art would recognise that various features of the described embodiments may be combined in accordance with the invention. In the claims, the term 'comprising' does not exclude the presence of other elements or steps.

Furthermore, although individually listed, a plurality of means, elements or method steps may be implemented by, for example, a single unit or processor. Additionally, although individual features may be included in different claims, these may possibly be advantageously combined, and the inclusion in different claims does not imply that a combination of features is not feasible and/or advantageous. Also, the inclusion of a feature in one category of claims does not imply a limitation to this category, but rather indicates that the feature is equally applicable to other claim categories, as appropriate.

Furthermore, the order of individual steps in the method claim does not imply that the steps must be performed in this order. Rather, the steps may be performed in any suitable order. In addition, singular references do not exclude a plurality. Thus, references to 'a', 'an', 'first', 'second', etc. do not preclude a plurality.

Although the present invention has been described in connection with some embodiments, it is not intended to be limited to the specific form set forth herein. Rather, the scope of the present invention is limited only by the accompanying claims. Additionally, although a feature may appear to be described in connection with particular embodiments, one skilled in the art would recognise that various features of the described embodiments may be combined in accordance with the invention. In the claims, the term 'comprising' or "including" does not exclude the presence of other elements.

## Claims

1. A method of providing flow control information in an opposite direction to a data flow in an Integrated Access Backhaul network by an Adaptation layer, the Integrated Access Backhaul network comprising a plurality of IAB nodes, the method comprising upon polling from a second IAB node or a trigger a first IAB node of the plurality of IAB nodes transmitting hop-by-hop flow control information for an IAB bearer to the second IAB node of the plurality of IAB nodes, wherein the hop-by-hop flow control information is provided for an IAB bearer configured at the first and second IAB nodes and the flow control information indicates an available memory at the first IAB node for the corresponding bearer, wherein only in case of memory being available at the first IAB node the second IAB node is allowed to transmit data of the flow.

## Patentansprüche

1. Verfahren zum Bereitstellen von Flusssteuerungsinformationen in einer zu einem Datenfluss entgegengesetzten Richtung in einem Netzwerk mit integriertem Zugangs-Backhaul durch eine Anpassungsschicht, wobei das Netzwerk mit integriertem Zugangs-Backhaul eine Vielzahl von IAB-Knoten umfasst, wobei das Verfahren umfasst, bei Abfragen von einem zweiten IAB-Knoten oder einem Trigger eines ersten IAB-Knotens der Vielzahl von IAB-Knoten, Übertragen von Hop-by-Hop-Flusssteuerungsinformationen für einen IAB-Bearer an den zweiten IAB-Knoten der Vielzahl von IAB-Knoten, wobei die Hop-by-Hop-Flusssteuerungsinformationen für einen IAB-Bearer bereitgestellt sind, der an den ersten und zweiten IAB-Knoten konfiguriert ist, und die Flusssteuerungsinformationen einen verfügbaren Speicher an dem ersten IAB-Knoten für den entsprechenden Bearer anzeigen, wobei nur für den Fall, dass der Speicher an dem ersten IAB-Knoten verfügbar ist, dem zweiten IAB-Knoten erlaubt wird, Daten des Flusses zu übertragen.

## Revendications

1. Procédé de fourniture d'informations de commande de flux dans une direction opposée à un flux de données dans un réseau de raccordement d'accès intégré par une couche d'adaptation, le réseau de raccordement d'accès intégré comprenant une pluralité de noeuds IAB, le procédé comprenant suite à l'interrogation d'un second noeud IAB ou d'un déclencheur, un premier noeud IAB de la pluralité de noeuds IAB transmettant des informations de commande de flux saut par saut pour un porteur IAB au second noeud IAB de la pluralité de noeuds IAB, dans lequel les informations de commande de flux saut par saut sont prévues pour un porteur IAB configuré aux premier et second noeuds IAB et les informations de commande de flux indiquent une mémoire disponible au premier noeud IAB pour le porteur correspondant, dans lequel seulement dans le cas de la disponibilité de la mémoire au premier noeud IAB, le second noeud IAB est autorisé à transmettre des données du flux.

Fig. 1

Fig. 2

Fig. 3

Fig. 4

Fig. 5

Fig. 6

Fig. 7

Fig. 11

Fig. 8

IAB-donor

CU
(PDCP)
SDU discard if needed

F1-U

PDCP Delivery/transmission indication to IAB node
(from RLC ARQ or HARQ)

High rate High rate

DU
(Lower layers)
No per UE info → DL aggregated equally

Aggregated RLC bearer
UE A + UE B

Flow Control Information
(per RB, per UE)

IAB-node

MT

DU
(Lower layers)
As UE B link is bad → discard

Good link: the DU scheduler
adapts to higher DL rate

Bad link: the DU scheduler
adapts to lower DL rate

(good)
CQI, ...

(bad) CQI, ...

UE A        UE B

Fig. 9

Fig. 10